# EUROPÄISCHE PATENTSCHRIFT

(11) **EP 1 364 441 B1**
(45) Veröffentlichungstag und Bekanntmachung des Hinweises auf die Patenterteilung: **27.04.2005**
(21) Anmeldenummer: 00962219.2
(22) Anmeldetag: 16.08.2000
(51) Int. Cl.: H02K 7/02, H02K 19/10, H02K 29/06

(54) **ELEKTROMAGNETISCHE ANTRIEBSVORRICHTUNG**
ELECTROMAGNETIC DRIVE
DISPOSITIF D'ENTRAINEMENT ELECTROMAGNETIQUE

(30) Priorität: 16.08.1999 DE 19938148
(43) Veröffentlichungstag der Anmeldung: 26.11.2003
(73) Patentinhaber: Thöne, Hermann, 67071 Ludwigshafen (DE)
(72) Erfinder: Thöne, Hermann, 67071 Ludwigshafen (DE)
(86) Internationale Anmeldenummer: PCT/DE2000/002761
(87) Internationale Veröffentlichungsnummer: WO 2001/013495

(56) Entgegenhaltungen:
- US-A- 5 514 923
- US-A- 5 920 138
- US-A- 5 925 952

## Beschreibung

Die Erfindung betrifft eine elektromagnetische Antriebsvorrichtung, bestehend aus einer Schwungscheibe mit an beiden Seiten in gleichen Abständen angebrachten kreisrunden ferromagnetischen Ankerscheiben.Denen gegenüber befinden sich in gleicher Höhe auf ebenfalls kreisrunden Scheiben in gleichen Abständen angeordnete Elektromagnete gleicher Bauart im gleichen Durchmesser der ferromagnetischen Ankerscheiben. Elektromagnete und Ankerscheiben sind durch Luftspalte getrennt.

Aus der EP 0348 984 A1 ist ein zweiteiliger, bürstenloser Generator und Motor bekannt, dessen Abtriebswelle an einer Rotorscheibe aus Aluminium angeschlossen ist und in gleichen Abständen ferromagnetische Ankerscheiben am Radiusende der Rotorscheibe sich gegenüberliegend angebracht sind.Diesen liegen axial durch Luftspalttrennung Elektromagnete als Statorpole gegenüber. Die Ankerscheiben können zwei hintereinander liegende Statorpole überbrücken, um den Magnetfluß zu unterbrechen und zu schließen, wenn sich der Rotor dreht. Dadurch entstehen Flußlinien mit alternierenden Richtungen durch die Spulen, wodurch die Wechselspannung entsteht.

Aus der US 5514923 ist ein DC Motor mit Generator und Schwungradcharakteristik bekannt. Bei dem Motor sind als Ankerplatten kreisrunde Permanentmagnete in offensichtlich amagnetische Rotorscheiben, die auch als Schwungscheiben dienen, eingefügt. Den Rotorscheiben axial gegenüber liegt eine offensichtlich ebenfalls amagnetische Statorscheibe, in der Luftspulen integriert sind. Dies sind um die Innenwände der Rundgehäuse gewundene Spulen mit Draht von hoher Leitfähigkeit. Es soll hiermit ein hohes Ausgangs-Drehmoment erzeugt werden. Die scheibenförmigen Rotoren plus das Gewicht der Permamentmagnete, die rundum der Rotorscheiben angebracht sind, sollen genügend Masse haben, um die kinetische Energie zu speichern.

Die US 5747902 zeigt ein rotierendes Gerät mit mehreren, ineinander verschachtelten Rotoren, welche mit Permamentmagneten bestückt sind, wobei mit Radiallagern der Abstand konstant gehalten werden soll.

Die vorliegende Erfindung weicht generell von dem genannten Stand der Technik sowohl im Aufbau als auch von der Aufgabe weitgehend ab.

Der Erfindung liegt die Aufgabe zugrunde, eine elektromagnetische Antriebsvorrichtung zu schaffen, die ohne wesentlichen Stromanstieg größere Leistungen abgibt, dabei platz- und gewichtseinsparend ist und mit hohem Wirkungsgrad besonders in Fahrzeugen Anwendung finden kann.

Diese Aufgabe wird durch die Merkmale des Anspruchs 1 gelöst. Die Unteransprüche enthalten Weiterbildungen und Ausgestaltungen.

Bei der Lösung übernehmen Elektromagnete und ferromagnetische Ankerscheiben berührungsfrei durch gezielte Strominjektionen, die über Gabelsensoren geschaltet werden, die Funktion des Schwungradlaufs.

Gibt man Strom in die Drahtwicklungen der Elektromagnete, wird nicht wie beim rotierenden Elektromotor ein elektromagnetisches Drehfeld, sondern durch die fortlaufenden Strominjektionen auf die im Kreis angeordneten Elektromagnete in Verbindung den jeweils gegenüberliegenden ferromagnetischen Ankerscheiben ein rotierendes, elektromagnetisches Wanderfeld erzeugt.

Bei einem Beispiel von 12 Elektromagneten und 8 gegenüberliegenden ferromagnetischen Ankerscheiben, jeweils 6 + 4 auf beiden Seiten der Schwungscheibe, wird durch eine Dreiertaktschaltung die entsprechende Drehung der Schwungscheibe erzeugt.Diese Schaltung wird durch Gabelsensoren in Verbindung von durchlaufenden Blechfahnen ausgelöst. Die Fahnen sind auf der Welle eines kleinen elektrischen Steuermotors fest angebracht. Sie sind so eingestellt, daß beim Eintauchen einer Fahne in den jeweiligen Gabelsensor die vorher austretende Fahne unwirksam ist.

Die Fahnen sind so eingeteilt, daß keine Überschneidungen in der Art entstehen, daß das Schwungrad zum Stillstand kommt.

Die Drehzahl wird durch stufenlose Einstellung des Steuermotors, auf dessen Welle die Blechfahnen befestigt sind, bewirkt. Mit der Beschleunigung des Steuermotors wird auch die Drehzahl des Schwungrades erhöht.

Die Erfindung wird nachstehend anhand eines der Figuren 1 bis 10 dargestellten Ausführungsbeispiels näher erläutert. Es zeigen:
- Fig. 1:: Draufsicht auf eine feststehende Aluminiumscheibe mit Elektromagneten,
- Fig. 2:: Draufsicht auf eine drehbare Aluminiumscheibe mit Ankerscheiben,
- Fig. 3:: Schnitt durch einer erfindungsgemäßen Antriebs-Vorrichtung,
- Fig. 4:: Detailansicht der feststehenden Aluminiumscheibe,
- Fig. 5:: Querschnitt durch eine Ankerscheibe,
- Fig. 6:: Skizze zum Zusammenwirken von Stator und Rotor,
- Fig. 7:: Schnitt durch eine erfindungsgemäße Antriebskombination mit Lagern,
- Fig. 8:: Skizze zur Erläuterung der Funktion der Gabelsensoren,
- Fig. 9 und 10:: Schnitt und Draufsicht auf eine mit der Antriebsvorrichtung verwendbaren elektromagnetischen Kupplung.

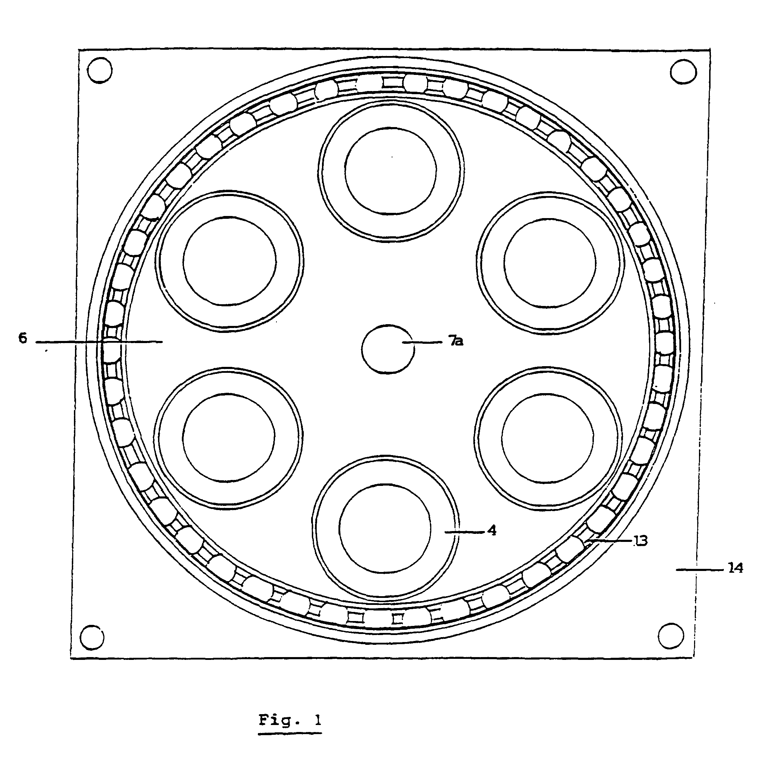

Fig. 1 zeigt eine an der Gehäusewand 14 angebrachte runde Aluminiumscheibe 6 in der Mitte der Gehäusewand. Hierauf ist ein Radiallager 13 montiert. Innerhalb des Lagerkranzes sind Elektromagnete 4 in gleichen Abständen auf der Aluminiumscheibe 6 angebracht.

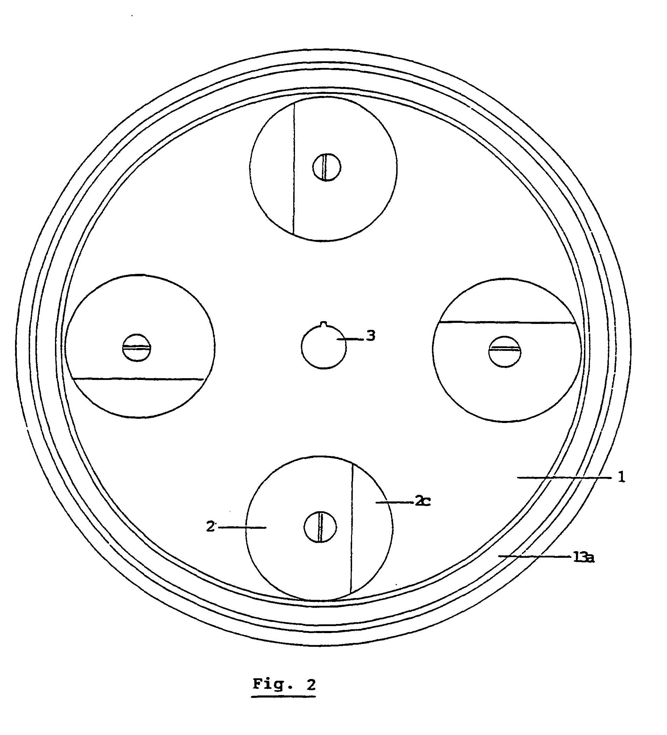

Fig. 2 zeigt eine Aluminiumscheibe 1, auf der ein Lagerring 13a passend zum Radiallager 13 eingelassen ist. Innerhalb des Lagerrings sind ferromagnetische Ankerscheiben 2 in gleichen Abständen auf der Scheibe 1 befestigt.

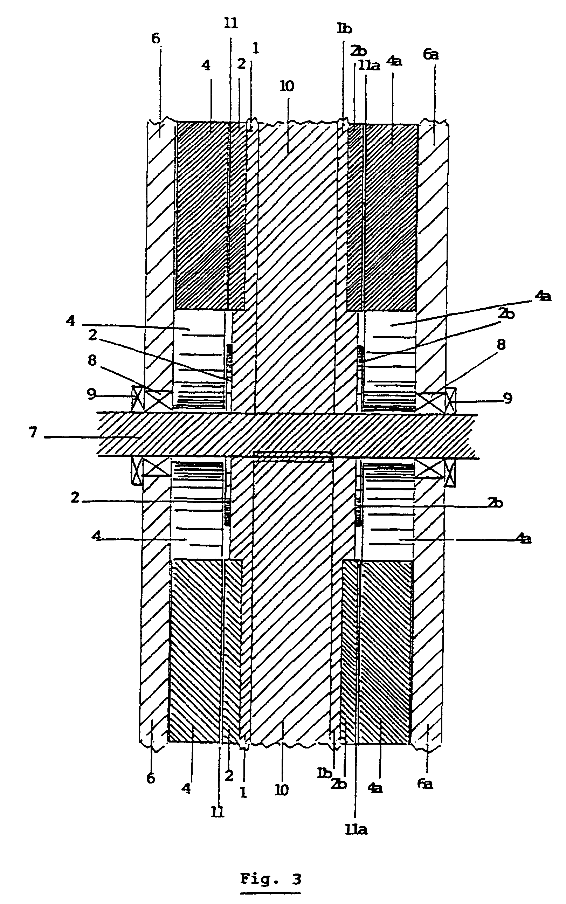

Die Zusammensetzung der Antriebsvorrichtung ist aus Fig. 3 ersichtlich. Auf der Abtriebswelle 7 ist eine Schwungscheibe 10 fest montiert. An der Schwungscheibe sind links und rechts die Aluminiumscheiben 1 und 1b befestigt. Auf diesen Aluminiumscheiben sind ferromagnetische Ankerscheiben 2 und 2b montiert Auf den Aluminiumscheiben 6 und 6a sind jeweils die Elektromagnete 4 und 4a montiert.

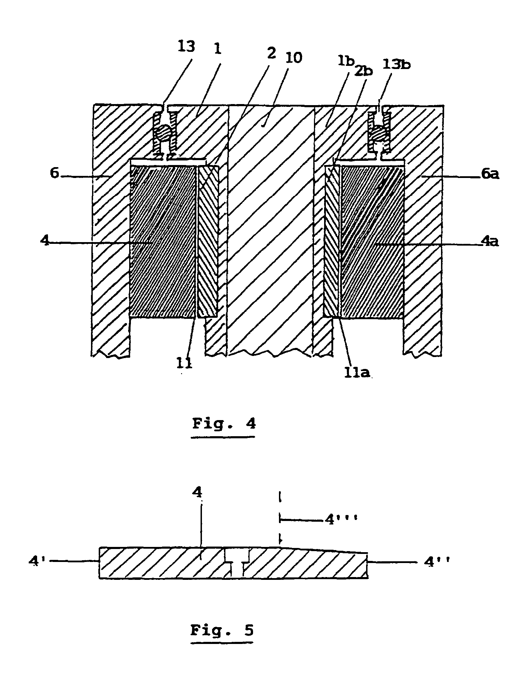

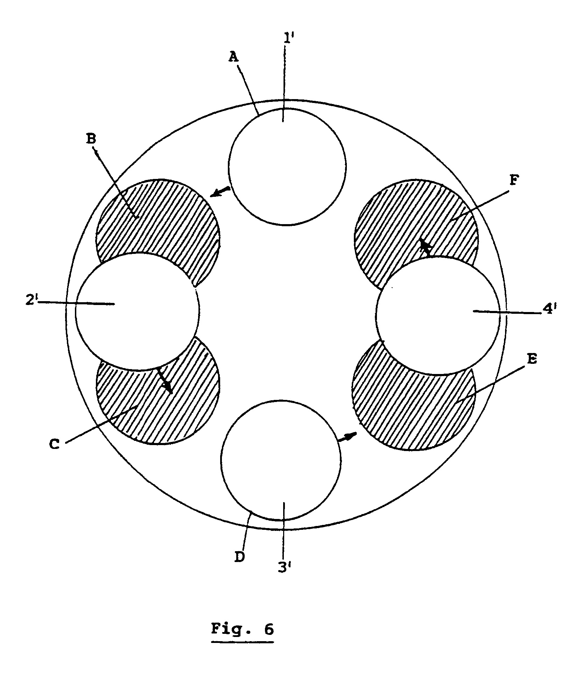

Fig. 4 zeigt die Randabschlüsse der Aluminiumplatten 6 und 6a. Sie sind so beschaffen, daß sie mit der Schwungscheibe 10 randschlüssig abschließen. Die hervorragenden Ränder der Platten 1 und 1b überdecken die ferromagnetischen Ankerscheiben 2 und 2b wie auch teilweise die Elektromagnete 4 und 4a. Ebenfalls überdecken die hervorragenden Ränder der Scheiben 6 und 6a die Elektromagnete 4 und 4a teilweise. Die Ränder werden durch Radiallager 13 und 13b getrennt gehalten. Mit dem Schwungrad drehen sich die Scheiben 1 und 1b mit den jeweiligen ferromagnetischen Ankerscheiben 2 und 2b. Die Ankerscheiben sind, wie Fig. 5 zeigt, etwa 1/3 des Durchmessers einseitig abgeschrägt. Dies bewirkt eine jeweils vollständige Abdekkung der Anzugsmagnete während des Betriebes. Fig. 6 zeigt den Bewegungsrhythmus zwischen den Elektromagneten A,B,C,D,E,F und den Ankerscheiben 1',2',3',4'.

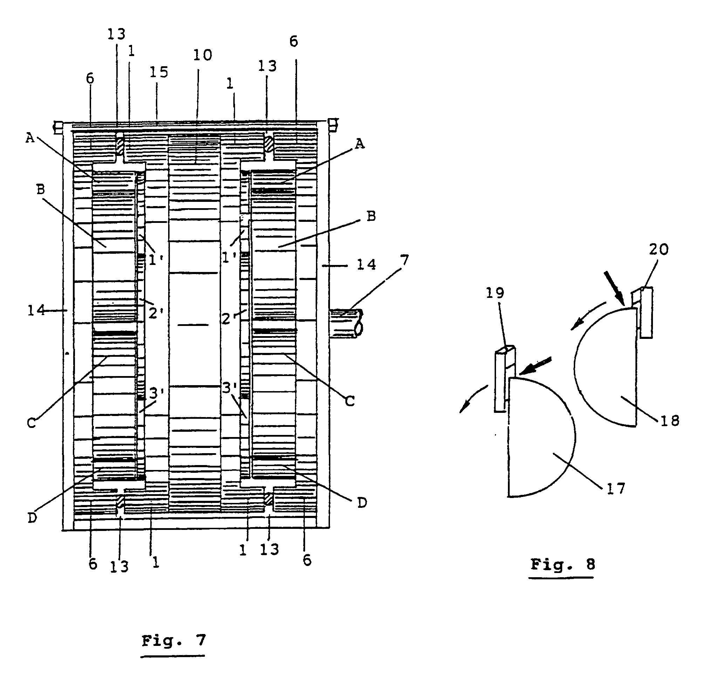

Fig. 7 zeigt das Gesamtpaket des Antriebs und Fig. 8 die Gabelsensoren 19 und 26 mit den Blechfahnen 17 und 18.

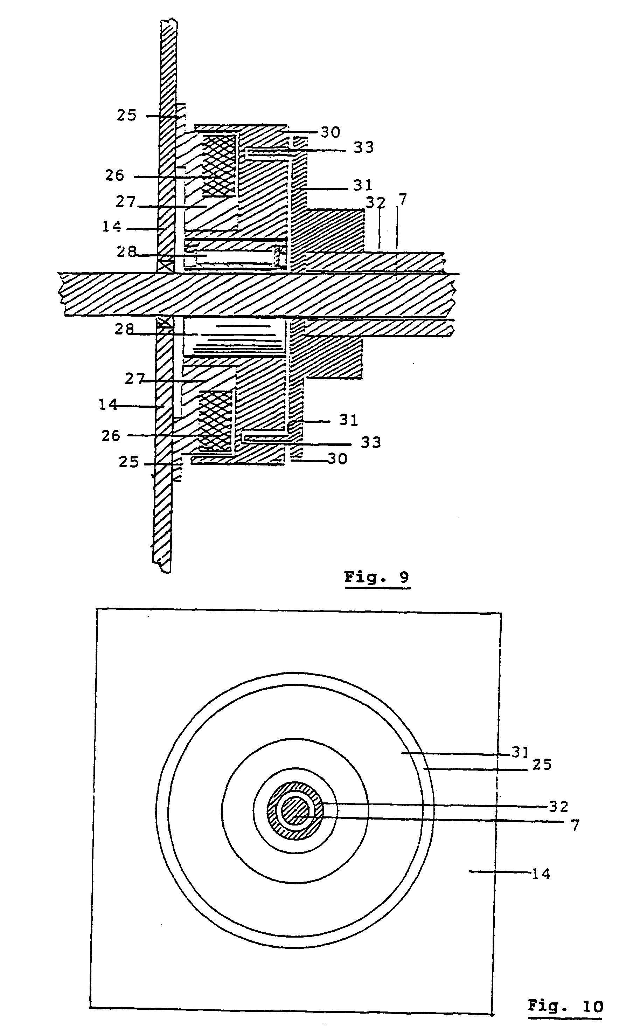

Fig. 9 und 10 zeigt eine Gehäusewand mit der Abtriebswelle 7 und einer stufenlos steuerbaren elektrischen Kupplung zur zusätzlichen Drehmomentübertragung.

Der Antrieb arbeitet folgendermaßen:

Der regelbare Steuermotor wird eingeschaltet, gleichzeitig Strom über elektronische Steuerungen auf die Elektromagnete gegeben. Der Steuermotor dreht mit seiner Welle die Blechfahne 17,18 für die ersten 4 Elektromagnete 4, 4a in den dafür vorgesehenen Gabelsensor 19, 20. Die ersten 4 Elektromagnete ziehen die nächstliegenden ferromagnetischen Ankerscheiben 2, 2b an, bis diese die Elektromagnete vollkommen abdecken. Im selben Moment schalten wegen Verlassen der Blechfahne 17, 18 aus dem Gabelsensor 19, 20 diese Magnete ab, und zur gleichen Zeit werden die 4 nächsten Elektromagnete aktiviert, weil die nächste Blechfahne in den nächsten Gabelsensor eintaucht. Diese Elektromagnete ziehen wieder die nächsten ferromagnetischen Ankerscheiben bis zur restlosen Abdeckung der Elektromagnete an und so setzt es sich weiter fort. Durch Hochdrehen des Steuermotors wird die Drehzahl des Schwungrades erhöht. Hierdurch wird der Ankerscheibentransport zügig vorangetrieben. Die Schwungscheibe hat außer der Aufgabe der Energiespeicherung auch den Ausgleich bei evtl auftretenden Pausen in Sekundenbruchteilen zu bringen.

Bei dem zeichnerisch angegebenen Beispiel auf Fig. 6 besteht die Bestückung aus 6 Elektromagneten A,B,C,D,E,F und 4 ferromagnetischen Ankerscheiben 1',2',3',4'. Ankerscheiben und Elektromagnete werden durch Luftspalte von äußerst geringem Abstand getrennt, damit es zu keinem Kraftschluß kommt und die Funktion in Frage gestellt würde.

Über die entsprechenden Gabelsensoren 19,20 wird Strom in die Elektromagnete C und F gegeben. Hierdurch werden die Ankerscheiben 2'und 4'von den Elektromagneten C und F angezogen. Noch bevor die Ankerscheiben 2'und 4' die Position über die Elektromagneten C und F richtig eingenommen haben, schalten die Elektromagnete E und B ein und ziehen die Ankerscheiben 1' und 3'an. So geht es wechselseitig weiter in der Form, daß immer, bevor die jeweiligen 2 Elektromagnete einschalten durch Eintauchen der jeweiligen Blechfahne 17 in den Gabelsensor 19, die anderen zwei durch Verlassen der Blechfahne 18 aus dem Gabelsensor 20 in Sekundenbruchteilen ausgeschaltet haben.

Die Funktion des Antriebs wird durch die Magnetwirkung ausgelöst.

Aus den Ergebnissen von Versuchen ist bekannt, daß bei dieser Form der Nutzbarmachung der Elektromagnetenergie durch
1. die Abschrägung der Ankerscheiben
2. die Luftspalteinstellung
3. indirekte Magnetanziehung der Ankerscheiben
ein gewisser Prozentsatz aus der Primärenergie verloren geht. Dieser Verlust wird durch die Zusammenfassung mehrerer Elektromagnete kompensiert, was den rotierenden Antrieb ausmacht und so auch als Fahrzeugantriebe nutzbar machen.

Der Luftspalt zwischen Magneten und Ankerscheiben 11 ergibt sich durch den festen Sitz der Radiallager 13. Die Scheibenränder 1 u. 1b; 6 u. 6a sind durch die Radiallager 13 u. 13b getrennt. Die Lager sind so eingepaßt, daß die Luftspalte 11 u. 11a entstehen. Entsprechende Montageeinstellungen werden für den genauen Abstand zwischen den Elektromagneten 4 u. 4a und den Ankerscheiben 2 u. 2b durchgeführt. Die Luftspalte bewegen sich zwischen 0,05 und 0,1 mm.

Für eine zusätzliche Drehmomentübertragung ist an der Seitenwand 14, durch welche die Abtriebswelle 7 läuft, eine stufenlos steuerbare elektromagnetische Kupplung mit axialer Anziehung des Ankers angebaut. Aus Figur 9 und 10 ist die durchlaufende Abtriebswelle 7 ersichtlich, der Rotor 30 mit dem Luftspalt 33,der Stator 27 mit Magnetkörper 26, der Haltering 25 und der Freilauf 16. Eine Hohlwelle 32 steht in direkter Verbindung zu der Radachse. Sinn der steuerbaren elektromagnetischen Kupplung ist die steuerbare Drehmomentübertragung , indem das Drehmoment je nach Erfordernissen abgeleitet werden kann.

Wegen des Stromverbrauchs der Vorrichtung ist die magnetische Kombination in der vorliegenden Version gewählt worden, weil mit verhältnismäßig sehr geringer Nennleistung hohe Kräfte entwickelt werden, die - unbedeutend der Höhe der zu bewältigten Aufgabe - gleichbleibend sind. Bei geringer oder sehr hoher Belastung bleibt die Stromaufnahme gleich, was gegenüber anderen Elektroantrieben einen überaus hohen Vorteil hat. Es bietet sich außerdem wegen des geringen Stromverbrauchs die Verwendung von Solarstrom an.

## Patentansprüche

1. Elektromagnetische Antriebsvorrichtung, bestehend aus
- einer Schwungscheibe (10) mit einer Abtriebswelle (7)
- zwei mit jeder Stirnseite der Schwungscheibe (10) verbundenen Aluminiumscheiben (1, 1b), die den gleichen Durchmesser wie die Schwungscheibe (10) aufweisen, wobei an den Aluminiumscheiben (1, 1b) in gleichen Abständen untereinander sowie zum Rand der Aluminiumscheibe (1, 1b) mindestens vier runde, ferromagnetische Ankerscheiben (2, 2b) angebracht sind.
- zwei feststehenden Aluminiumscheiben (6a), die den mit der Schwungscheibe (10) verbundenen Aluminiumscheiben (1, 1b) jeweils axial gegenüberliegen und auf denen in gleichen Abständen untereinander mindestens 6 Elektromagnete (4,4a) so angeordnet sind, daß sie den ferromagnetischen Ankerscheiben (2, 2b) unter Bildung eines Luftspaltes gegenüberstehen,
- in den Außenrändern der Aluminiumscheiben (1, 1b; 2, 2b) eingebauten Radiallagern zur Konstanthaltung des Luftspaltes und zur drehbaren Lagerung der Schwungscheibe (10).

2. Elektromagnetische Antriebsvorrichtung nach Anspruch 1, wobei die ferromagnetischen Ankerscheiben (2, 2b) in Umfangsrichtung gesehen auf mindestens einem Drittel ihres Durchmessers einseitig abgeschrägt sind.

3. Elektromagnetische Antriebsvorrichtung nach Anspruch 1 oder 2, wobei die Abtriebswelle (7) mit einer stufenlos steuerbaren elektrischen Kupplung verbunden ist.

4. Elektromagnetische Antriebsvorrichtung nach einem der vorangehenden Ansprüche, wobei zusätzlich ein Elektro-Kleinmotor vorgesehen ist, an dessen Welle Blechfahnen (17,18) angebracht sind, die beim Ein- und Austauchen in/aus Gabelsensoren (19, 20) die Bestromung der Elektromagnete ( 4 ) steuern.

## Claims

1. Electromagnetic driving device, consisting of
- a flydisc (10) with a driven shaft (7),
- two aluminum discs with same diameter as the flydisc (1, 1b), which are connected with each frontside of the flydisc (10). On the aluminum discs (1, 1b) a minimum of four round ferromagnetic anchor discs (2, 2b) are mounted, equidistant to each other and to the edge of the aluminum disc.
- Two fixed aluminum discs (6a), which are located axial opposite to the aluminum discs (1, 1b), which are connected with the flydisc (10). A minimum of 6 electromagnets (4, 4a) are installed equidistant to each other in the way that these electromagnets are located opposite the ferromagnetic anchor discs (2, 2b), separated by an air gap.
- In the marginal zone of the aluminum discs (1, 1b; 2, 2b) radial bearings are mounted to guarantee a constant air gap and to serve the bearing for the flydisc (10).

2. Electromagnetic driving device according to claim 1, in which the ferromagnetic anchor discs (2,2b) are bevel toward the periphery on one side of the disc. The bevel area is minimum 1/3 of the disc diameter.

3. Electromagnetic driving device according to claim 1 or 2, in which the driven shaft (7) is connected with an stepless adjustable electric clutch.

4. Electromagnetic driving device according to one of the above claims, in which, additionally, a small electric motor is provided. On its shaft the plate-lugs (17,18) are mounted, which guide the current to the electromagnets by rotating in/out in fork sensors (19, 20).

## Revendications

1. Dispositif d'entraînement électromagnétique, se composant
- d'un disque d'inertie (10) avec un arbre de sortie (7) ;
- de deux disques en aluminium (1, 1b) reliés à chacune des faces frontales du disque d'inertie (10), présentant le même diamètre que le disque d'inertie (10), au moins quatre disques d'ancrage (2, 2b) circulaires, ferromagnétiques étant installés sur les disques en aluminium (1, 1 b) avec les mêmes écartements entre eux et par rapport au bord des disques en aluminium (1, 1 b) ;
- de deux disques en aluminium (6a) fixes respectivement axialement opposés aux disques en aluminium (1, 1b) reliés au disque d'inertie (10) et sur lesquels au moins 6 électro-aimants (4, 4a) présentant les mêmes écartements entre eux sont installés de manière que les disques d'ancrage (2, 2b) ferromagnétiques se trouvent face à face en formant un entrefer ;
- de roulements radiaux intégrés aux bords extérieurs des disques en aluminium (1, 1b; 2, 2b) afin de maintenir l'entrefer constant et pour le logement rotatif du disque d'inertie (10).

2. Dispositif d'entraînement électromagnétique selon revendication 1, les disques d'ancrage (2, 2b) ferromagnétiques étant unilatéralement biseautés sur au moins un tiers de leur diamètre vus dans le sens de leur circonférence.

3. Dispositif d'entraînement électromagnétique selon revendication 1, ou 2, l'arbre de sortie (7) étant relié à un accouplement électrique à commande progressive.

4. Dispositif d'entraînement électromagnétique selon l'une des revendications ci-avant, un petit moteur électrique étant en plus prévu sur l'arbre duquel des ailettes en tôle (17, 18) sont installées, lesquelles ont pour fonction la mise sous courant des électro-aimants (4) lors de la pose et de la dépose des capteurs à fourches (19, 20).
